# EUROPÄISCHE PATENTSCHRIFT

(11) **EP 2 504 223 B1**
(45) Veröffentlichungstag und Bekanntmachung des Hinweises auf die Patenterteilung: **08.07.2015**
(21) Anmeldenummer: 11704026.1
(22) Anmeldetag: 15.02.2011
(51) Int. Cl.: B62H 5/14

(54) **SCHLOSS**
LOCK
ANTIVOL

(30) Priorität: 16.02.2010 DE 102010008053
(43) Veröffentlichungstag der Anmeldung: 03.10.2012
(73) Patentinhaber: ABUS August Bremicker Söhne KG, 58300 Wetter-Volmarstein (DE)
(72) Erfinder: ERBE, Alexander, 56479 Rehe (DE); BECKER, Thomas, 65597 Hünfelden (DE)
(74) Vertreter: Manitz, Finsterwald & Partner GbR
(86) Internationale Anmeldenummer: PCT/EP2011/000702
(87) Internationale Veröffentlichungsnummer: WO 2011/101116

(56) Entgegenhaltungen:
- EP-A2- 1 818 246
- DE-A1- 10 356 306

## Beschreibung

Die Erfindung betrifft ein Rahmenschloss für ein Zweirad, mit einem Sperrriegel, welcher als ein drehbarer Rundbügel ausgebildet ist und zwischen einer Verriegelungsstellung und einer Öffnungsstellung verstellbar ist, und mit einer elektromechanischen Antriebseinrichtung.

Bei Schlössern ist es allgemein üblich, einen Sperrriegel rein mechanisch mittels einer direkt mit dem Sperrriegel verbundenen Handhabe oder über ein Betätigungselement zu verstellen, welches über Hebel und/oder Zahnräder mit dem Sperrriegel gekoppelt ist. Weiterhin sind auch Schlösser bekannt, bei denen der Sperrriegel mittels einer elektromechanischen Antriebseinrichtung verstellbar ist. Auch bei dieser Art von Schlössern erfolgt die Kraftübertragung auf den Sperrriegel gewöhnlich über Hebel, Zahnräder, Zahnstangen oder dergleichen.

Die Antriebseinrichtung wird üblicherweise durch eine Steuerungseinheit angesteuert, welche zumeist Mittel für eine Berechtigungskontrolle aufweist. Die Berechtigungskontrolle kann beispielsweise über einen Code erfolgen, welcher je nach Anwendungsgebiet mittels Tastatureingabe, Magnetstreifenleser, per Funk oder auf sonstige Weise an die Steuerungseinheit übertragen wird und mit einem in der Steuerungseinheit hinterlegten Code verglichen wird. Nur bei Übereinstimmung der beiden Codes erfolgt eine Verstellung des Sperrriegels.

Ein mit einem elektromechanisch verstellbaren Sperrriegel ausgestattetes Schloss erfordert jedoch häufig eine hohe, kostenintensive Fertigungspräzision. Zudem sind Schlösser mit elektromechanisch verstellbarem Sperrriegel oft anfällig gegenüber Verschmutzung und Verschleiß.

Aus der EP-A-1818246 ist ein Rahmenschloss mit den Merkmalen des Oberbegriffs des Anspruchs 1 bekannt.

Die DE 10356306 A1 offenbart ein Kraftfahrzeugschloss mit einem flexiblen Zugmittel, das von einem Motor zum Öffnen einer Sperrklinke aufwickelbar ist.

Es ist daher die Aufgabe der vorliegenden Erfindung, ein Rahmenschloss der eingangs genannten Art zu schaffen, welches einfach und kostengünstig zu fertigen ist und verschleißarm und verschmutzungsresistent zu betreiben ist.

Die Lösung der Aufgabe erfolgt durch die Merkmale des Anspruchs 1.

Bei dem erfindungsgemäßen Rahmenschloss erfolgt die Übertragung der zum Verstellen des Sperrriegels nötigen Kräfte nicht über Hebel, Zahnräder oder dergleichen, sondern über ein flexibles, reißfestes Antriebsband. Ein derartiges Antriebsband kann beispielsweise aus Metall oder Kunststoff hergestellt sein, wobei sowohl eine Verwendung von folienartigem oder drahtartigem Material als auch von Gewebeband möglich ist. Die Kraftübertragung mittels Antriebsband ermöglicht es, die elektromechanische Antriebseinrichtung (z.B. Elektromotor) in Bezug auf den Sperrriegel variabel anzuordnen, was insbesondere bei beengten Raumverhältnissen von Vorteil ist. Durch das Antriebsband werden zudem Maßtoleranzen ausgeglichen, so dass das Schloss kostengünstig mit einer relativ geringen Fertigungsgenauigkeit hergestellt werden kann. Weiterhin ist ein solcher Bandantrieb sehr verschleißarm und unanfällig gegenüber Verschmutzungen, sodass im Laufe der Zeit auftretende, verschmutzungsbedingte Reibungsverluste weitgehend vermieden werden. Dadurch ist es möglich, eine relativ leistungsschwache und damit energiesparende elektromechanische Antriebseinrichtung zu verwenden, was im Hinblick auf einen netzunabhängigen Betrieb des Schlosses von Vorteil ist.

Gemäß einer bevorzugten Ausführungsform ist das Antriebsband mit einer drehbaren Spule auf- und abwickelbar verbunden. Die Spule kann mittels der elektromechanischen Antriebseinrichtung gedreht werden. Die Betätigung des Antriebsbandes erfolgt demnach durch Auf- und Abwickeln des Antriebsbandes auf bzw. von der Spule, sodass eine kraftschlüssige Kopplung zwischen dem Antriebsband und der elektromechanischen Antriebseinrichtung möglich ist. Je nach Ausgestaltung der Verbindung zwischen dem Antriebsband und der Spule ist eine Kraftübertragung mittels Reibschluss und/oder Formschluss möglich.

Das Schloss ist als ein so genanntes Rahmenschloss für ein Zweirad und der Sperrriegel als ein drehbarer Rundbügel ausgebildet, wobei das Antriebsband insbesondere an dem Außenumfang des Rundbügels befestigt ist. Damit wird ein Rahmenschloss realisiert, welches besonders komfortabel zu betätigen ist. In Verbindung mit geeigneten Mitteln zur Zugangskontrolle lässt sich ein vollautomatisches Rahmenschloss realisieren. Zum Beispiel könnte ein Funkschlüssel eingesetzt werden, welcher einen sonst nur bei Kraftfahrzeugen üblichen Schließkomfort auch für Zweiräder verfügbar macht.

Weiterhin ist es bevorzugt, wenn das zumindest eine Antriebsband einen flachen Querschnitt besitzt, insbesondere in der Form eines Rechtecks und im Unterschied beispielsweise zu einem kreisrunden Querschnitt eines Seils. Bei einem derartigen flachen Querschnitt kann das Antriebsband besonders reibungsarm und somit auch verschleißarm geführt werden, insbesondere entlang einer gewölbten Führungsbahn im Falle eines Rahmenschlosses für ein Zweirad mit einem Rundbügel.

Gemäß einer bevorzugten Ausführungsform weist das Antriebsband eine endseitige Umbiegung oder Verdickung auf, welche in eine an dem Sperrriegel vorgesehene, vorzugsweise eine Hinterschneidung aufweisende Vertiefung eingehakt ist. Auf diese Weise lässt sich das Antriebsband besonders einfach an dem Sperrriegel befestigen. Die Vertiefung kann zum Beispiel auf einfache Weise durch eine Randbohrung oder einen Einschnitt im Sperrriegel hergestellt werden, wobei der Abstand der Randbohrung vom Außenumfang des Sperrriegels so gewählt ist, dass die Randbohrung den Außenumfang schneidet. Durch Einbringen eines schräg verlaufenden Einschnitts kann ebenfalls eine Hinterschneidung zum Einhängen des jeweiligen Antriebsbands gebildet werden. Alternativ kann das Antriebsband aber auch auf andere Weise, zum Beispiel durch Niet-, Schraub-, Löt-, Schweiß- oder Klemmverbindungen an dem Sperrriegel befestigt werden.

Gemäß einer weiteren vorteilhaften Ausführungsform weist das Schloss ein erstes und ein zweites Antriebsband auf, wobei das erste Antriebsband zum Verstellen des Sperrriegels in die Verriegelungsstellung und das zweite Antriebsband zum Verstellen des Sperrriegels in die Öffnungsstellung ausgebildet ist. Bei dieser Ausgestaltung werden zur Verstellung des Sperrriegels ausschließlich Zugkräfte übertragen. Bei ausreichender Dimensionierung und Führung des Antriebsbandes wäre es jedoch auch möglich, den Sperrriegel in eine Richtung über Zugkräfte und in die andere Richtung über Schubkräfte zu verstellen.

Bevorzugt ist für jedes Antriebsband ein separater Spulenabschnitt vorgesehen.

Anstelle von zwei separaten Antriebsbändern können die beiden genannten Antriebsbänder auch als zwei Abschnitte eines einstückigen Antriebsbands ausgebildet sein, welches zum Beispiel in einen Diametralschlitz der Spule aufgenommen oder um die Spule herum gewickelt ist. In dem letztgenannten Fall kann das Antriebsband mit der Spule fest verbunden sein oder an der Spule reibschlüssig gehalten sein. Ferner kann bei dieser Ausführungsform einer der beiden Abschnitte des Antriebsbands einen Längsschlitz aufweisen, durch den beim Auf- und Abwickeln des Antriebsbands der andere Abschnitt geführt ist, um hierdurch eine Kräftesymmetrie zu bewirken.

Bevorzugt ist, wenn das Schloss ein Gehäuse aufweist, in welchem die elektromechanische Antriebseinrichtung angeordnet ist und/oder zumindest eine Führungsbahn für das oder die Antriebsbänder integriert ist. Dadurch lässt sich der Fertigungs- und Montageaufwand weiter verringern.

Gemäß noch einer weiteren vorteilhaften Ausführungsform weist das Schloss zumindest ein versetzbares Sicherungselement auf, welches zwischen einer Sicherungsstellung und einer Entsicherungsstellung versetzbar ist und mit einem Sicherungsabschnitt des Sperrriegels zusammenwirkt, um den Sperrriegel in der Verriegelungsstellung und/oder der Öffnungsstellung zu sichern. Vorzugsweise weist der Sperrriegel zumindest eine Eingriffsvertiefung auf, mit welcher das Sicherungselement zusammenwirkt. Das Sicherungselement bewirkt demnach eine Blockierung des Sperrriegels in der jeweiligen Stellung.

Bevorzugt erfolgt die Bewegung des Sicherungselements durch eine zusätzliche elektromechanische Antriebseinrichtung, wodurch sich ein vollautomatisches Schloss realisieren lässt.

Bevorzugt weist das Sicherungselement einen Steuerabschnitt auf, welcher mit einer bewegbaren Kulisse eines Steuerelements durch Zwangsführung zusammenwirkt, um das Sicherungselement zu versetzen. Durch die kulissengesteuerte Zwangsführung wird ein unbefugtes Öffnen des Schlosses mittels der sogenannten "Hammerschlagmethode" verhindert, bei der ein durch eine Feder vorgespanntes Sicherungselement durch einen gezielten Hammerschlag unter Ausnutzung der Massenträgheit kurzzeitig in Richtung seiner Entsicherungsstellung bewegt werden kann.

Bevorzugt ist weiterhin, wenn das Schloss zwei der genannten Sicherungselemente umfasst, welche einen jeweiligen Steuerabschnitt aufweisen, der mit einer jeweiligen in einem Steuerelement vorgesehenen Kulisse zusammenwirkt, wobei die Kulissen derart ausgebildet sind, dass beim Bewegen des Steuerelements die Sicherungselemente in entgegengesetzte Richtungen versetzt werden und in einer Sicherungsstellung mit einem jeweiligen Sicherungsabschnitt des Sperrriegels zusammenwirken, wobei die jeweiligen Sicherungsabschnitte an einander gegenüberliegenden Seiten des Sperrriegels vorgesehen sind. Bei dieser Ausgestaltung ist eine besonders zuverlässige Blockierung des Sperrriegels gewährleistet, da die Sicherungselemente den Sperrriegel zangenartig umgreifen. Bei Verwendung eines einzigen, gemeinsamen Steuerelements ist der bauliche Aufwand dennoch gering.

Vorzugsweise ist die vorgenannte zusätzliche elektromechanische Antriebseinrichtung dazu ausgebildet, einen Steuerzapfen exzentrisch um eine Achse drehbar anzutreiben, welcher mit dem Steuerelement zusammenwirkt, um eine Rotation des Steuerzapfens in eine Linearbewegung des Steuerelements umzusetzen.

Bevorzugt weist das Schloss eine Steuereinrichtung zum Betätigen der elektromechanischen Antriebseinrichtung und/oder der zusätzlichen elektromechanischen Antriebseinrichtung auf. Mittels dieser Steuereinrichtung ist ein teil- oder vollautomatischer Betrieb des Schlosses möglich, bei dem die Betätigung des Sperrriegels und/oder des Sicherungselements durch geeignete Signale gesteuert und insbesondere auch eine Berechtigungsprüfung für eine Öffnung des Schlosses durchgeführt werden kann.

Gemäß einer vorteilhaften Ausführungsform der Erfindung ist die Steuereinrichtung ausgelegt, das Erreichen zumindest einer Endposition des Sperrriegels, insbesondere das Erreichen der Verriegelungsstellung und/oder der Öffnungsstellung zu erkennen, insbesondere mittels einer Überwachung des die elektromechanische Antriebseinrichtung durchfließenden Stroms. Falls bei Erreichen einer der beiden Endstellungen eine Blockierung des Sperrriegels beispielsweise durch das Sicherungselement erfolgt, kann die elektromechanische Antriebseinrichtung abgeschaltet werden, da der Sperrriegel durch das Sicherungselement in der erreichten Stellung gehalten wird. Dadurch lässt sich der Stromverbrauch der elektromechanischen Antriebseinrichtung drastisch reduzieren, und zusätzliche Positionssensoren sind nicht erforderlich.

Weiterhin bevorzugt ist, wenn die Steuereinrichtung ferner ausgelegt ist, die zusätzliche elektromechanische Antriebseinrichtung zum Verschieben des oder der Sicherungselemente in die Sicherungsstellung nur dann zu betätigen, wenn sich der Sperrriegel in der Verriegelungsstellung oder der Öffnungsstellung befindet, sodass das oder die Sicherungselemente mit dem oder den Sicherungsabschnitten zuverlässig in Eingriff bringbar sind. Damit wird vermieden, dass die Sicherungselemente in einer Stellung des Sperrriegels betätigt werden, bei der kein Eingriff mit den Sicherungsabschnitten möglich ist. Hierdurch wird der Stromverbrauch des Schlosses weiter reduziert und ein Verklemmen der Sicherungselemente mit der bewegbaren Kulisse und/oder dem Sperrriegel vermieden.

Gemäß einer weiteren bevorzugten Ausführungsform umfasst der Sperrriegel wenigstens eine Vertiefung, die mit einer in Richtung des Sperrriegels vorgespannten Anschlagfeder zusammenwirkt, um einen jeweiligen Endanschlag für die Verriegelungsstellung oder die Öffnungsstellung des Sperrriegels zu bilden. Die Vertiefung kann beispielsweise durch einen schrägen Einschnitt gebildet sein, um eine Kerbe zu bilden, oder durch eine Bohrung. Besonders vorteilhaft ist es, wenn für die vorgenannte Befestigung des Antriebsbands am Sperrriegel, für den vorgenannten Eingriff des versetzbaren Sicherungselements, und für die Bildung des oder der Endanschläge jeweils eine Vertiefung am Sperrriegel vorgesehen ist, da somit für mehrere Funktionen eine gleichartige Bearbeitung des Sperrriegels (Einbringen von Ausnehmungen) möglich ist. Hierdurch vereinfacht sich die Herstellung erheblich.

Weitere vorteilhafte Ausführungsformen sind in den Unteransprüchen, der Beschreibung und den Zeichnungen angegeben.

Die Erfindung wird nachfolgend anhand eines Ausführungsbeispiels mit Bezug auf die Zeichnungen beschrieben. Es zeigen:
- Fig. 1: ein Rahmenschloss in Explosionsdarstellung;
- Fig. 2: eine Aufsicht des Rahmenschlosses gemäß Fig. 1 unter Weglassung einiger Details;
- Fig. 3 und 4: perspektivische Ansichten des Rahmenschlosses gemäß Fig. 1 unter Weglassung einiger Details;
- Fig. 5: eine Detailansicht des Sperrriegels des Rahmenschlosses gemäß Fig. 1 mit daran befestigtem Antriebsband in einer Querschnittsdarstellung;
- Fig. 6: eine perspektivische Detailansicht der Spule des Rahmenschlosses gemäß Fig. 1; und
- Fig. 7: eine perspektivische Detailansicht des Steuerelements und der Sicherungselemente des Rahmenschlosses gemäß Fig. 1.

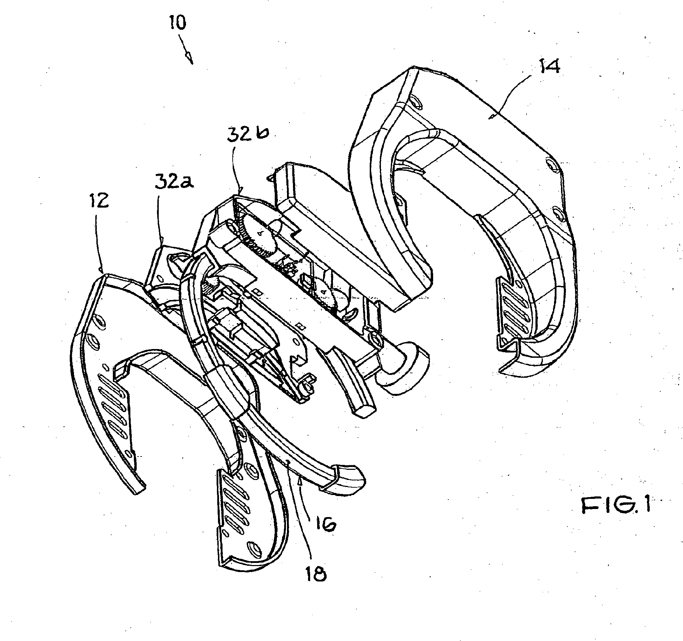

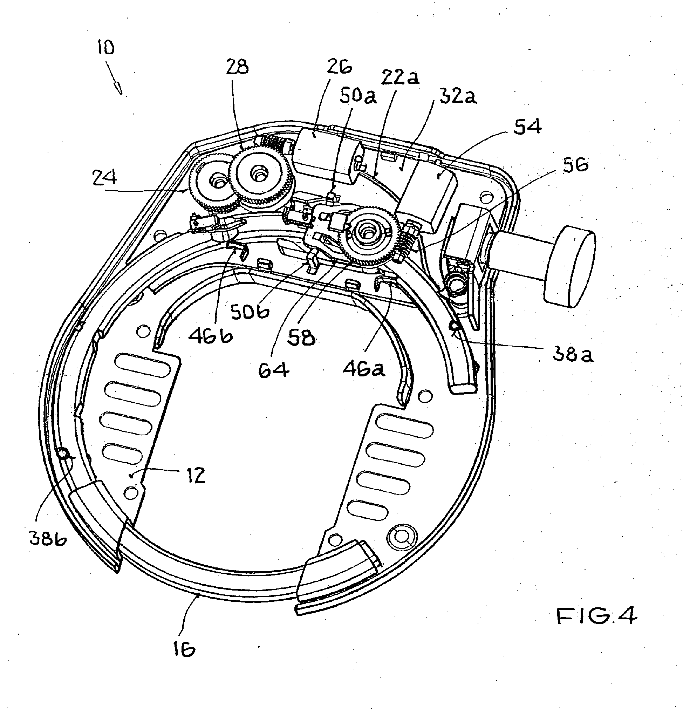

Fig. 1 bis 4 zeigen schematisch den Aufbau eines erfindungsgemäßen Schlosses beispielhaft anhand eines Rahmenschlosses 10 zur Montage an den Hinterradstreben eines Fahrrads.

Das Rahmenschloss 10 umfasst ein Außengehäuse, welches aus einem Unterteil 12 und einem Oberteil 14 zusammengesetzt ist und die weiteren Komponenten des Rahmenschlosses 10 umschließt.

Im Inneren des Rahmenschlosses 10 ist als Sperrriegel ein drehbarer Rundbügel 16 zum Umgreifen der Hinterradfelge vorgesehen. Zum Verstellen des Rundbügels 16 zwischen einer in den Fig. 1 bis 4 dargestellten Verriegelungsstellung und einer nicht dargestellten Öffnungsstellung ist an zwei voneinander beabstandeten Stellen des Außenumfangs 18 des Rundbügels 16 jeweils ein flexibles Metallband 20a bzw. 20b befestigt. Die Metallbänder 20a, 20b sind über eine jeweilige Führungsbahn 22ä bzw. 22b zu einer Spule 24 geführt und auf dieser gegensinnig zueinander aufgewickelt, d.h. bei Drehung der Spule 24 in eine bestimmte Richtung wird das eine Metallband aufgewickelt während zugleich das andere Metallband abgewickelt wird.

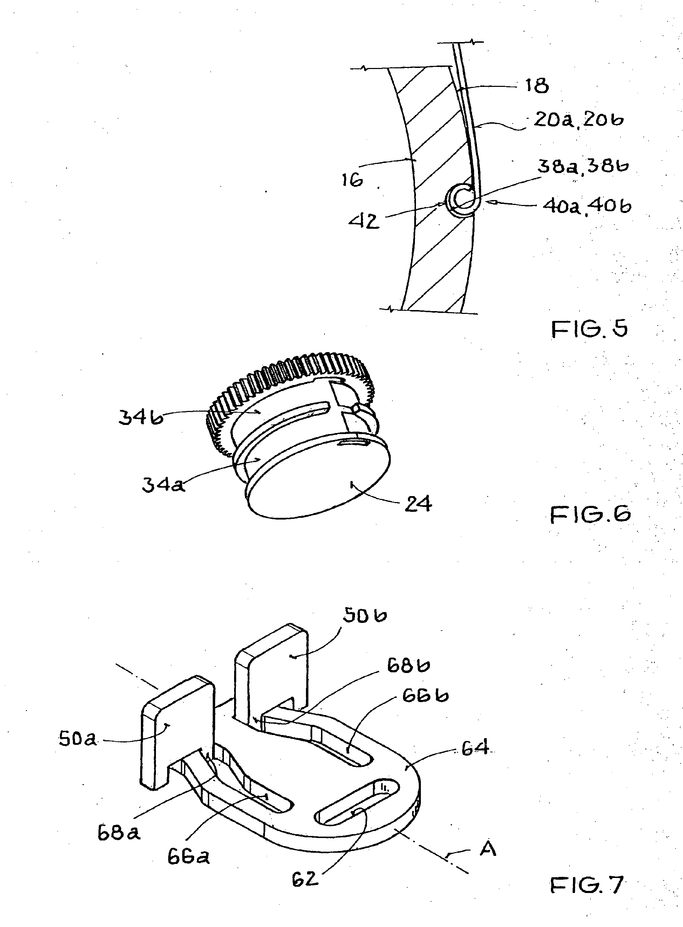

Der Antrieb der mit einer Stirnradverzahnung versehenen Spule 24 erfolgt mittels eines Elektromotors 26, dessen Abtriebswelle die Spule 24 über eine Getriebeschnecke 30 und ein Zahnrad 28 in beide Drehrichtungen antreiben kann. Wie in Fig. 6 gut zu erkennen ist, weist die Spule 24 für jedes Metallband 20a, 20b jeweils einen separaten, als Vertiefung ausgebildeten Spulenabschnitt 34a, 34b auf. Damit können beide Metallbänder 20a, 20b getrennt voneinander auf- und abgewickelt werden, so dass diese sich nicht untereinander verhaken können. Der Elektromotor 26 bildet eine elektromechanische Antriebseinrichtung für die Metallbänder 20a, 20b, wobei die Getriebeschecke 30 und das Zahnrad 28 ein Untersetzungsgetriebe bilden.

Anstelle des in beide Verstellrichtungen wirkenden Bandantriebs wäre es auch möglich, einen Bandantrieb nur für eine Verstellrichtung vorzusehen und für die Verstellung in die Gegenrichtung eine vorgespannte Feder vorzusehen. Alternativ ist es auch möglich, ein einziges Metallband 20a und die zugeordnete Führungsbahn 22a nach Art eines Bowdenzugs auszubilden, der auf Zug und auf Druck wirksam ist.

Aus Fig. 5 ist die Befestigung der Metallbänder 20a, 20b an dem Rundbügel 16 ersichtlich, wobei die Darstellung nicht maßstäblich ist. Ein jeweilige Teilabschnitt des Metallbandes 20a bzw. 20b liegt an dem Außenumfang 18 des Rundbügels 16 an, wobei die Länge des jeweiligen Teilabschnitts von der Drehstellung des Rundbügels 16 abhängt. Weiterhin weist der Rundbügel 16 eine Randbohrung 38a, 38b auf, welche den Außenumfang 18 derart schneidet, dass im Außenumfang 18 ein senkrecht zur Umfangsrichtung verlaufender Schlitz 40a, 40b ausgebildet ist. Die Randbohrung 38a, 38b weist somit eine Hinterschneidung auf, durch die ein Befestigungsabschnitt 42 des Metallbandes 20a bzw. 20b in der Randbohrung 38a, 38b gehalten wird. Der Befestigungsabschnitt 42 ist durch ein Umbiegen oder Aufrollen eines Endabschnitts des Metallbandes 20a bzw. 20b zu einem Auge hergestellt.

Anstelle der Umbiegung kann der Befestigungsabschnitt 42 auch durch eine beliebige Verdickung gebildet sein, beispielsweise in Form eines am Endabschnitt des Metallbandes 20a bzw. 20b befestigten Niets, eines Stifts oder dergleichen.

Grundsätzlich kann das Metallband 20a bzw. 20b auch auf andere Weise an dem Außenumfang 18 befestigt werden, beispielsweise durch Vernieten, Verschrauben, Verlöten, Verschweißen oder Verkleben. Die in Fig. 5 dargestellte Befestigung mittels der Hinterschneidung erlaubt jedoch eine besonders einfache Montage, da der umgebogene Befestigungsabschnitt 42 einfach in eine Richtung senkrecht zur Zeichnungsebene in die Randbohrung 38a, 38b bzw. den Schlitz 40a, 40b eingeschoben werden kann.

Mit Bezug nun wieder auf die Fig. 1 bis 4 wird der weitere Aufbau des Rahmenschlosses 10 erläutert.

Die Führungsbahnen 22a, 22b sind jeweils in zwei Innengehäuseschalen 32a, 32b ausgebildet, welche im zusammengesetzten Zustand den Rundbügel 16 sowie die Metallbänder 20a, 20b umgreifen, d.h. jede der Innengehäuseschalen 32a, 32b weist jeweils die Führungsbahn 22a, 22b bzw. eine seitliche Begrenzung hiervon auf.

Die Innengehäuseschalen 32a, 32b sind ferner mit verschiedenen Ausnehmungen, Vertiefungen und Bohrungen versehen, welche als Aufnahmen, Führungen oder Lager für verschiedene Komponenten des Rahmenschlosses 10 dienen, beispielsweise für den Elektromotor 26, das Zahnrad 28 oder die Spule 24. Im zusammengesetzten Zustand bilden die Innengehäuseschalen 32a, 32b sozusagen ein zweites Gehäuse, welches die Komponenten des Rahmenschlosses 10 lagegenau fixiert und zusätzlich zu dem Außengehäuse vor Verschmutzung oder einem gewaltsamen Zugriff schützt.

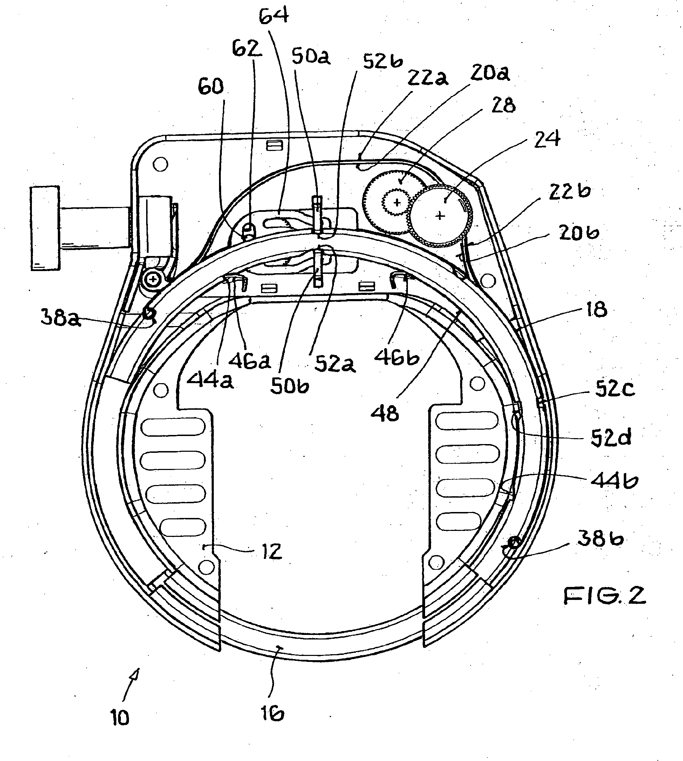

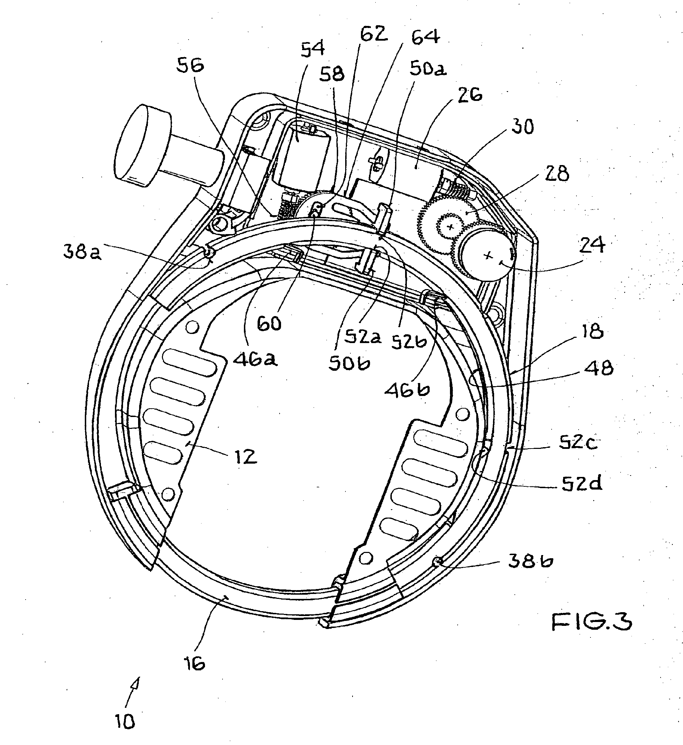

Mit Bezug auf Fig. 2 wird nun die Funktionsweise des Rundbügelantriebs erläutert. Um den Rundbügel 16 von der in Fig. 2 dargestellten Verriegelungsstellung in die Öffnungsstellung zu verstellen, wird die Spule 24 mittels des Elektromotors 26 (Fig. 3) entgegen dem Uhrzeigersinn angetrieben. Dadurch wird das Metallband 20b auf die Spule 24 aufgewickelt, während das bereits teilweise auf die Spule 24 aufgewickelte Metallband 20a von der Spule 24 abgewickelt wird. Dadurch bewegt sich der Rundbügel 16 gleichfalls entgegen dem Uhrzeigersinn, bis die Öffnungsstellung erreicht ist. Bei Umkehrung der Drehrichtung wird das Metallband 20a auf die Spule 24 aufgewickelt, während das auf die Spule 24 aufgewickelte Metallband 20b von der Spule 24 abgewickelt wird. Der Rundbügel 16 wird dabei zurück in die Verriegelungsstellung gedreht.

Als Endanschläge für die Verriegelungs- und Öffnungsstellung sind am Innenumfang 48 des Rundbügels 16 Kerben 44a, 44b vorgesehen, in die jeweils in Abhängigkeit von der Stellung des Rundbügels 16 eine von zwei Anschlagfedern 46a, 46b eingreifen kann. Wie in Fig. 2 zu erkennen ist, bildet die Kerbe 44a zusammen mit der Anschlagfeder 46a einen Endanschlag für die Verriegelungsstellung, während die Kerbe 44b zusammen mit der Anschlagfeder 46b einen Endanschlag für die Öffnungsstellung darstellt.

Zur Sicherung oder Blockierung des Rundbügels 16 in der Verriegelungsbzw. Öffnungsstellung sind in den Innengehäuseschalen 32a, 32b zwei plättchenförmige, radial zur Drehrichtung des Rundbügels 16 verschiebbare Sicherungselemente 50a, 50b angeordnet, welche wahlweise mit schlitzförmigen, am Außenumfang 18 bzw. am Innenumfang 48 des Rundbügels 16 eingebrachten Vertiefungen 52a bis 52d in Eingriff bringbar sind. Die Vertiefungen 52a bis 52d dienen somit als Sicherungsabschnitte. Die Vertiefungen 52b und 52c befinden sich am Außenumfang 18, während die Vertiefungen 52a und 52d am Innenumfang 48 vorgesehen sind. Wie in den Fig. 2 und 3 zu erkennen ist, wirken die Sicherungselemente 50a, 50b in der Verriegelungsstellung mit den Vertiefungen 52a, 52b zusammen, während in der Öffnungsstellung ein Eingriff mit den Vertiefungen 52c, 52d erfolgt. Durch das zangenartige Zusammenwirken der Sicherungselemente 50a, 50b mit den Vertiefungen 52a bis 52d wird eine besonders wirksame Sicherung oder Blockierung des Rundbügels 16 erreicht.

Die Betätigung der Sicherungselemente 50a, 50b erfolgt über eine zusätzliche Antriebseinrichtung in Form eines weiteren Elektromotors 54, welcher über eine Getriebeschnecke 56 ein mit einer Stirnverzahnung versehenes weiteres Zahnrad 58 antreibt (vgl. Fig. 3). Das Zahnrad 58 weist einen exzentrisch zur Drehachse des Zahnrads 58 angeordneten Steuerzapfen 60 auf, welcher in ein als Kulissenführung dienendes Langloch 62 eines Steuerelements 64 eingreift (vgl. Fig. 2). Mittels des Steuerzapfens 60 und des Langlochs 62 wird eine Drehbewegung des Zahnrads 58 in eine Linearbewegung des Steuerelements 64 umgewandelt, wobei die Bewegungsrichtung des Steuerelements 64 tangential zur Drehrichtung des Rundbügels 16 verläuft.

Wie in Fig. 7 gut zu erkennen ist, weist das Steuerelement 64 zwei längliche Kulissen 66a, 66b auf, welche spiegelbildlich zu einer Symmetrieachse A des Steuerelements 64 angeordnet sind. Die Sicherungselemente 50a, 50b weisen jeweils einen Steuerabschnitt 68a bzw. 68b auf, welcher in der jeweiligen Kulisse 66a, 66b aufgenommen ist. Da sich der Relativabstand der beiden Kulissen 66a, 66b voneinander in Richtung auf das Langloch 62 hin vergrößert, werden die beiden Sicherungselemente 50a, 50b, die sich in Fig. 7 in ihrer Sicherungsstellung befinden, bei einer Verschiebung des Steuerelements 64 in Pfeilrichtung voneinander weg bewegt und außer Eingriff mit den Vertiefungen 52a, 52b (Fig. 2 und 3) gebracht. In dieser Entsicherungsstellung ist es dann möglich, durch Betätigen des Elektromotors 26 den Rundbügel 16 von der Verriegelungsstellung in die Öffnungsstellung zu verstellen.

Die Zwangsführung der Sicherungselemente 50a, 50b in den jeweiligen Kulissen 66a, 66b gewährleistet eine besonders hohe Manipulationssicherheit, da ein unbefugtes Öffnen des Schlosses durch die eingangs erwähnte Hammerschlagmethode nicht möglich ist.

Das Rahmenschloss 10 weist ferner ein nicht dargestelltes Steuergerät auf, welches sowohl den Elektromotor 26 für die Verstellung des Ründbügels 16 als auch den Elektromotor 54 zur Verschiebung der Sicherungselemente 50a, 50b ansteuert. Dieses Steuergerät weist ferner Mittel zur Berechtigungsprüfung auf, sodass nur dann eine Verstellung des Rahmenschlosses 10 in die Öffnungsstellung erfolgt, wenn ein entsprechender Berechtigungscode - beispielsweise über ein Funksignal - empfangen wurde. Die Stromversorgung des Steuergerätes und der Elektromotoren 26, 54 kann netzunabhängig über eine Batterie oder einen Akkumulator erfolgen.

Wenn das Steuergerät einen derartigen, zur Öffnung des Rahmenschlosses 10 berechtigenden Befehl empfängt, steuert es zunächst den Elektromotor 54 an, um die Sicherungselemente 50a, 50b außer Eingriff mit den Vertiefungen 52a, 52b zu bringen. Nachfolgend wird der Elektromotor 26 derart angesteuert, dass sich die Spule 24 entgegen dem Uhrzeigersinn dreht und - wie vorstehend erläutert - den Rundbügel 16 von der Verriegelungsstellung in die Öffnungsstellung dreht. Anschließend wird der Elektromotor 54 erneut betätigt, sodass die Sicherungselemente 50a, 50b nunmehr in Eingriff mit den Vertiefungen 52c, 52d gebracht werden, um den Rundbügel 16 in der Öffnungsstellung zu blockieren oder zu sichern, sodass ein ungewolltes Verriegeln des Fahrrades vermieden wird.

Auf einen entsprechenden Verriegelungsbefehl hin erfolgt die Betätigung der Elektromotoren 26, 54 sinngemäß in umgekehrter Reihenfolge.

Die Erkennung der Endlagen der Sicherungselemente 50a, 50b und/oder des Rundbügels 16 kann über eine Detektion des Motorstroms erfolgen, der bei Erreichen der Endlage, d.h. bei einer Blockierung des Rundbügels 16 bzw. der Sicherungselemente 50a, 50b ansteigt. Alternativ können auch Positionssensoren zur direkten oder indirekten Detektion der jeweiligen Verstellpositionen vorgesehen werden.

Das erfindungsgemäße Schloss erlaubt demnach ein komfortables und zuverlässiges Ver- und Entriegeln eines Zweirades, ohne dass vom Benutzer eine mechanische Verstellung durchgeführt werden muss.

Anstelle der Verwendung eines separaten Elektromotors 54 können der Rundbügel 16 und die Sicherungselemente 50a, 50b auch mittels eines einzigen Elektromotors 26 angetrieben werden, wobei durch mechanische Mittel eine Steuerung der Bewegungsfolge bewirkt wird.

### Bezugszeichenliste

- 10: Rahmenschloss
- 12: Unterteil
- 14: Oberteil
- 16: Rundbügel
- 18: Außenumfang
- 20a, 20b: Metallband
- 22a, 22b: Führungsbahn
- 24: Spule
- 26: Elektromotor
- 28: Zahnrad
- 30: Getriebeschnecke
- 32a, 32b: Innengehäuseschale
- 34a, 34b: Spulenabschnitt
- 38a, 38b: Randbohrung
- 40a, 40b: Schlitz
- 42: Befestigungsabschnitt
- 44a, 44b: Kerbe
- 46a, 46b: Anschlagfeder
- 48: Innenumfang
- 50a, 50b: Sicherungselement
- 52a - 52d: Vertiefung
- 54: Elektromotor
- 56: Getriebeschnecke
- 58: Zahnrad
- 60: Steuerzapfen
- 62: Langloch
- 64: Steuerelement
- 66a, 66b: Kulisse
- 68a, 68b: Steuerabschnitt

## Patentansprüche

1. Rahmenschloss (10) für ein Zweirad, mit einem Sperrriegel (16), welcher als ein drehbarer Rundbügel (16) ausgebildet ist und zwischen einer Verriegelungsstellung und einer Öffnungsstellung verstellbar ist, und mit einer elektromechanischen Antriebseihrichturig (26),
**dadurch gekennzeichnet,**
**dass** an dem Sperrriegel (16) zumindest ein Antriebsband (20a, 20b) befestigt ist, welches zum Verstellen des Sperrriegels (16) mittels der elektromechanischen Antriebseinrichtung (26) antreibbar ist.

2. Rahmenschloss (10) nach Anspruch 1,
**dadurch gekennzeichnet,**
**dass** das Antriebsband (20a, 20b) mit einer Spule (24) auf- und abwickelbar verbunden ist, wobei die Spule mittels der elektromechanischen Antriebseinrichtung (26) drehbar ist.

3. Rahmenschloss (10) nach Anspruch 1 oder 2,
**dadurch gekennzeichnet,**
**dass** das Antriebsband (20a, 20b) an dem Außenumfang (18) des Rundbügels (16) befestigt ist.

4. Rahmenschloss (10) nach einem der vorhergehenden Ansprüche,
**dadurch gekennzeichnet,**
**dass** das Antriebsband (20a, 20b) einen flachen Querschnitt aufweist.

5. Rahmenschloss (10) nach einem der vorhergehenden Ansprüche,
**dadurch gekennzeichnet,**
**dass** das Antriebsband (20a, 20b) eine endseitige Umbiegung (42) oder Verdickung aufweist, welche in eine an dem Sperrriegel (16) vorgesehene Vertiefung (38a, 38b) eingreift.

6. Rahmenschloss (10) nach einem der vorhergehenden Ansprüche,
**dadurch gekennzeichnet,**
**dass** das Rahmenschloss (10) ein erstes und ein zweites Antriebsband (20a, 20b) aufweist, wobei das erste Antriebsband (20a) zum Verstellen des Sperrriegels (16) in die Verriegelungsstellung und das zweite Antriebsband (20b) zum Verstellen des Sperrriegels (16) in die Öffnungsstellung ausgebildet ist.

7. Rahmenschloss (10) nach einem der vorhergehenden Ansprüche,
**dadurch gekennzeichnet,**
**dass** das Rahmenschloss (10) ein Gehäuse (12, 14, 32a, 32b) aufweist, in welchem die elektromechanische Antriebseinrichtung (26) angeordnet ist und/oder in welchem zumindest eine Führungsbahn (22a, 22b) für das oder die Antriebsbänder (20a, 20b) integriert ist.

8. Rahmenschloss (10) nach einem der vorhergehenden Ansprüche,
**dadurch gekennzeichnet ,**
**dass** das Rahmenschloss (10) zumindest ein versetzbares Sicherungselement (50a, 50b) aufweist, welches zwischen einer Sicherungsstellung und einer Entsicherungsstellung versetzbar ist und mit wenigstens einem Sicherungsabschnitt (52a - 52d) des Sperrriegels (16) zusammenwirkt, um den Sperrriegel (16) in der Verriegelungsstellung und/oder der Öffnungsstellung zu sichern, wobei das Rahmenschloss (10) vorzugsweise eine zusätzliche elektromechanische Antriebseinrichtung (54) zum Antreiben des oder der Sicherungselemente (50a, 50b) aufweist.

9. Rahmenschloss (10) nach Anspruch 8,
**dadurch gekennzeichnet,**
**dass** das Sicherungselement (50a, 50b) einen Steuerabschnitt (68a, 68b) aufweist, welcher mit einer bewegbaren Kulisse (66a, 66b) eines Steuerelements (64) durch Zwangsführung zusammenwirkt, um das Sicherungselement (50a, 50b) zu versetzen.

10. Rahmenschloss (10) nach Anspruch 9,
**dadurch gekennzeichnet,**
**dass** Rahmenschloss (10) zwei Sicherungselemente (50a, 50b) umfasst, welche einen jeweiligen Steuerabschnitt (68a, 68b) aufweisen, der mit einer jeweiligen in einem Steuerelement (64) vorgesehenen Kulisse (66a, 66b) zusammenwirkt, wobei die Kulissen (66a, 66b) derart ausgebildet sind, dass beim Bewegen des Steuerelements (64) die Sicherungselemente (50a, 50b) in entgegengesetzte Richtungen versetzt werden und in einer Sicherungsstellung mit einem jeweiligen Sicherungsabschnitt (52a - 52d) des Sperrriegels (16) zusammenwirken, wobei die jeweiligen Sicherungsabschnitte (52a - 52d) an einander gegenüberliegenden Seiten des Sperrriegels (16) vorgesehen sind.

11. Rahmenschloss (10) nach einem der vorgehenden Ansprüche,
**dadurch gekennzeichnet ,**
**dass** das Rahmenschloss (10) eine Steuereinrichtung zum Betätigen der elektromechanischen Antriebseinrichtung (26) aufweist, wobei die Steuereinrichtung ausgelegt ist, das Erreichen zumindest einer Endposition des Sperrriegels (16), insbesondere das Erreichen der Verriegelungsstellung und/oder der Öffnungsstellung, zu erkennen, insbesondere mittels einer Überwachung des die elektromechanische Antriebseinrichtung (26) durchfließenden Stroms.

12. Rahmenschloss (10) nach Anspruch 8 und 11,
**dadurch gekennzeichnet,**
**dass** die Steuereinrichtung auch zum Betätigen der zusätzlichen elektromechanischen Antriebseinrichtung (54) ausgebildet ist, wobei die Steuereinrichtung ferner ausgelegt ist, die zusätzliche elektromechanische Antriebseinrichtung (54) zum Versetzen des oder der Sicherungselemente (50a, 50b) in die Sicherungsstellung nur dann zu betätigen, wenn sich der Sperrriegel (16) in der Verriegelungsstellung oder der Öffnungsstellung befindet, so dass das oder die Sicherungselemente (50a, 50b) mit dem oder den Sicherungsabschnitten (52a - 52d) in Eingriff bringbar sind.

13. Rahmenschloss (10) nach einem der vorgehenden Ansprüche,
**dadurch gekennzeichnet,**
**dass** der Sperrriegel (16) wenigstens eine Vertiefung (44a, 44b) aufweist, die mit einer Anschlagfeder (46a, 46b) zusammenwirkt, um einen Endanschlag für die Verriegelungsstellung oder die Öffnungsstellung des Sperrriegels (16) zu bilden.

## Claims

1. A frame lock (10) for a two-wheeler, having a locking bolt (16) which is configured as a rotatable round hoop (16) and which is adjustable between a locking position and an opening position, and having an electromechanical drive device (26),
**characterized in that**
at least one drive band (20a, 20b) is fastened to the locking bolt (16) and is drivable by means of the electromechanical drive device (26) to adjust the locking bolt (16).

2. A frame lock (10) in accordance with claim 1,
**characterized in that**
the drive band (20a, 20b) is connected to a spool (24) which it can be wound onto and unwound from, with the spool being rotatable by means of the electromechanical drive device (26).

3. A frame lock (10) in accordance with claim 1 or claim 2,
**characterized in that**
the drive band (20a, 20) is fastened to the outer periphery (18) of the round hoop (16).

4. A frame lock (10) in accordance with any one of the preceding claims,
**characterized in that**
the drive band (20a, 20b) has a flat cross-section.

5. A frame lock (10) in accordance with any one of the preceding claims,
**characterized in that**
the drive band (20a, 20b) has a bent-over portion (42) or a thickened portion at the end side which engages into a recess (38a, 38b) provided at the locking bolt (16).

6. A frame lock (10) in accordance with any one of the preceding claims,
**characterized in that**
the frame lock (10) has a first and a second drive band (20a, 20b), with the first drive band (20a) being configured to adjust the locking bolt (16) into the locking position and the second drive band (20b) being configured to adjust the locking bolt (16) into the opening position.

7. A frame lock (10) in accordance with any one of the preceding claims,
**characterized in that**
the frame lock (10) has a housing (12, 14, 32a, 32b) in which the electromechanical drive device (26) is arranged and/or in which at least one guide track (22a, 22b) for the drive band or bands (20a, 20b) is integrated.

8. A frame lock (10) in accordance with any one of the preceding claims,
**characterized in that**
the frame lock (10) has at least one displaceable securing element (50a, 50b) which is displaceable between a securing position and a releasing position and which cooperates with at least one securing section (52a - 52d) of the locking bolt (16) to secure the locking bolt (16) in the locking position and/or in the opening position, wherein the frame lock (10) preferably has an additional electromechanical drive device (54) for driving the securing element or elements (50a, 50b).

9. A frame lock (10) in accordance with claim 8,
**characterized in that**
the securing element (50a, 50b) has a cam section (68a, 68b) which cooperates with a movable gate (66a, 66b) of a cam element (64) by compulsory guidance to displace the securing element or elements (50a, 50b).

10. A frame lock (10) in accordance with claim 9,
**characterized in that**
the frame lock (10) includes two securing elements (50a, 50b) which have a respective cam section (68a, 68b) which cooperates with a respective gate (66a, 66b) provided in a cam element (64), with the gates (66a, 66b) being formed such that, on the movement of the cam element (64), the securing elements (50a, 50b) are displaced in opposite directions and cooperate in a securing position with a respective securing section (52a - 52d) of the locking bolt (16), with the respective securing sections (52a - 52d) being provided at oppositely disposed sides of the locking bolt (16).

11. A frame lock (10) in accordance with any one of the preceding claims,
**characterized in that**
the frame lock (10) has a control device for actuating the electromechanical drive device (26), with the control device being designed to recognize the reaching of at least one end position of the locking bolt (16), in particular the reaching of the locking position and/or the opening position, in by means of a monitoring of the current flowing through the electromechanical drive device (26).

12. A frame lock (10) in accordance with claim 8 and claim 11,
**characterized in that**
the control device is also designed to actuate the additional electromechanical drive device (54), with the control device furthermore being designed to actuate the additional electromechanical device (54) for displacing the securing element or elements (50a, 50b) into the securing position only when the locking bolt (16) is located in the locking position or in the opening position so that the securing element or elements (50a, 50b) can be brought into engagement with the securing section or sections (52a - 52d).

13. A frame lock (10) in accordance with any one of the preceding claims,
**characterized in that**
the locking bolt (16) has at least one recess (44a, 44b) which cooperates with an abutment spring (46a, 46b) to form an end abutment for the locking position or for the opening position of the locking bolt (16).

## Revendications

1. Cadenas de cadre (10) pour un deux-roues, comprenant un verrou de blocage (16) qui est réalisé sous forme d'un arceau rond rotatif (16) et qui est déplaçable entre une position de verrouillage et une position ouverte, et comprenant un dispositif d'entraînement électromécanique (26),
**caractérisé en ce qu'**au moins une bande d'entraînement (20a, 20b) est fixée sur le verrou de blocage (16), bande qui est susceptible d'être entraînée au moyen du dispositif d'entraînement électromécanique (26) pour déplacer le verrou de blocage (16).

2. Cadenas de cadre (10) selon la revendication 1,
**caractérisé en ce que** la bande d'entraînement (20a, 20b) est reliée à une bobine (24) de façon à pouvoir être enroulée et déroulée, ladite bobine étant capable de rotation au moyen du dispositif d'entraînement électromécanique (26).

3. Cadenas de cadre (10) selon la revendication 1 ou 2,
**caractérisé en ce que** la bande d'entraînement (20a, 20b) est fixée à la périphérie extérieure (18) de l'arceau rond (16).

4. Cadenas de cadre (10) selon l'une des revendications précédentes,
**caractérisé en ce que** la bande d'entraînement (20a, 20b) présente une section transversale aplatie.

5. Cadenas de cadre (10) selon l'une des revendications précédentes,
**caractérisé en ce que** la bande d'entraînement (20a, 20b) comporte un rabattement terminal (42) ou un épaississement, qui s'engage dans un renfoncement (38a, 38b) prévu sur le verrou de blocage (16).

6. Cadenas de cadre (10) selon l'une des revendications précédentes,
**caractérisé en ce que** le cadenas de cadre (10) comprend une première et une seconde bande d'entraînement (20a, 20b), telle que la première bande d'entraînement (20 20a) est réalisée pour déplacer le verrou de blocage (16) jusque dans la position de verrouillage, et la seconde bande d'entraînement (20) est réalisée pour déplacer le verrou de blocage (16) jusque dans la position ouverte.

7. Cadenas de cadre (10) selon l'une des revendications précédentes,
**caractérisé en ce que** le cadenas de cadre (10) comprend un boîtier (12, 14, 32a, 32b) dans lequel est agencé le dispositif d'entraînement électromécanique (26) et/ou dans lequel est intégré au moins un trajet de guidage (22a, 22b) pour la ou les bandes d'entraînement (20a, 20b).

8. Cadenas de cadre (10) selon l'une des revendications précédentes,
**caractérisé en ce que** le cadenas de cadre (10) comprend au moins un élément de sécurité déplaçable (50a, 50b), qui peut être déplacé entre une position de sécurité et une position de libération, et qui coopère avec au moins une portion de sécurité (52a-52d) du verrou de blocage (16), afin de sécuriser le verrou de blocage (16) dans la position de verrouillage et/ou dans la position ouverte, dans lequel le cadenas de cadre (10) comprend de préférence un dispositif d'entraînement électromécanique (54) supplémentaire pour entraîner le ou les élément(s) de sécurité (50a, 50b).

9. Cadenas de cadre (10) selon la revendication 8,
**caractérisé en ce que** l'élément de sécurité (50a, 50b) comprend une portion de commande (58a, 68b), qui coopère avec un coulisseau déplaçable (66a, 66b) d'un élément de commande (64) par un guidage forcé afin de déplacer l'élément de sécurité (50a, 50b).

10. Cadenas de cadre (10) selon la revendication 9,
**caractérisé en ce que** le cadenas de cadre (10) comprend deux éléments de sécurité (50a, 50b), qui comportent chacun une portion de commande respective (68a, 68b) qui coopère avec un coulisseau respectif (66a, 66b) prévu dans un élément de commande (64), dans lequel les coulisseaux (66a, 66b) sont réalisés de telle façon que lors d'un déplacement de l'élément de commande (64) les éléments de sécurité (50a, 50b) sont déplacés dans des directions opposées et, dans une position de sécurité, coopèrent avec une portion de sécurité respective (52a-52d) du verrou de blocage (16), et les portions de sécurité respectives (52a-52d) sont prévues sur des côtés mutuellement opposés du verrou de blocage (16).

11. Cadenas de cadre (10) selon l'une des revendications précédentes,
**caractérisé en ce que** le cadenas de cadre (10) comprend un moyen de commande pour actionner le dispositif d'entraînement électromécanique (26), ledit moyen de commande étant conçu pour reconnaître qu'au moins une position finale du verrou de blocage (16) est atteinte, en particulier que la position de verrouillage et/ou la position ouverte est atteinte, en particulier au moyen d'une surveillance du courant qui traverse le dispositif d'entraînement électromécanique (26).

12. Cadenas de cadre (10) selon la revendication 8 et 11,
**caractérisé en ce que** le moyen de commande est également réalisé pour actionner le dispositif d'entraînement électromécanique supplémentaire (54), et le moyen de commande est en outre conçu pour actionner le dispositif d'entraînement électromécanique supplémentaire (54) afin de déplacer le ou les élément(s) de sécurité (50a, 50b) jusque dans la position de sécurité uniquement si le verrou de blocage (16) se trouve dans la position de verrouillage ou dans la position ouverte, de sorte que le ou les élément(s) de sécurité (50a, 50b) est/sont susceptible(s) d'être amené(s) en engagement avec la ou les portion(s) de sécurité (52a-52d).

13. Cadenas de cadre (10) selon l'une des revendications précédentes,
**caractérisé en ce que** le verrou de blocage (16) comporte au moins un renfoncement (44a, 44b), qui coopère avec un ressort de butée (46a, 46b) afin de former une butée terminale pour la position de verrouillage ou pour la position ouverte du verrou de blocage (16).
